# DEMANDE DE BREVET EUROPEEN

(11) **EP 2 540 566 A1**
(43) Date de publication de la demande: **02.01.2013**
(21) Numéro de dépôt: 12305622.8
(22) Date de dépôt: 04.06.2012
(51) Int. Cl.: B60N 2/62, B60N 2/18, B60N 2/02

(54) **SIEGE REGLABLE DE VEHICULE**

(30) Priorité: 27.06.2011 FR 1155662
(71) Demandeur: Renault S.A.S., 92100 Boulogne-Billancourt (FR)
(72) Inventeur: Guenaud, Hervé, 78720 CERNAY LA VILLE (FR); Leclerc, Jean-Philippe, 28130 HOUX (FR)

(57) **Abrégé**

L'invention se rapporte à un siège réglable de véhicule comprenant une assise (1) dotée à sa partie avant d'une traverse rigide (3).

La principale caractéristique d'un siège selon l'invention, est qu'il comprend un dispositif de levage (7) constitué par un bourrelet (8) en matériau mou et déformable et par au moins un bras (9) de positionnement supportant ledit bourrelet (8), chaque bras (9) étant implanté dans la traverse (3) d'assise et étant réglable au moins en hauteur pour faire émerger ledit bourrelet (8) de l'assise (1) du siège.

## Description

L'invention se rapporte à un siège réglable de véhicule. Les véhicules développés actuellement, et en particulier les véhicules automobiles, possèdent un haut niveau de sécurité et sont conçus pour être de moins en moins polluants. Un autre axe de développement, qui fait l'objet d'un soin particulier de la part des constructeurs, est le confort et l'ergonomie du poste de conduite au sein de l'habitacle du véhicule. En effet, un conducteur doit, d'une part, se sentir confortablement installé lorsqu'il fait de la route, de façon à économiser de la fatigue et à pouvoir facilement se concentrer sur les éléments extérieurs au véhicule, et d'autre part, être en mesure de réaliser des opérations routinières, telles que l'actionnement de la pédale d'embrayage ou de frein, sans avoir à fournir d'efforts et sans avoir à se livrer à des contorsions exagérées. L'invention se rapporte à un siège de véhicule réglable, conçu pour le confort d'un conducteur, afin qu'il puisse piloter son véhicule en toute sérénité et sans contraintes particulières.

Les sièges réglables de véhicule existent et ont déjà fait l'objet de brevets. On peut, par exemple, citer le brevet US6386633B1, qui se rapporte à un siège de véhicule ajustable, possédant une partie arrière sous assise, et une partie avant sous assise, la distance entre lesdites parties étant réglable pour pouvoir allonger l'assise du siège selon un axe longitudinal du véhicule. De plus, la partie avant sous assise, peut être dotée d'un coussin gonflable relié à une réserve d'air sous pression, le gonflement dudit coussin provoquant une élévation de la partie avant de l'assise. Les mécanismes mis en oeuvre dans un tel siège sont compliqués et difficiles à implanter, et le soulèvement de la partie avant de l'assise ne peut être que de faible amplitude en raison de la configuration des pièces impliquées.

Les sièges réglables selon l'invention permettent une surélévation de la partie avant de leur assise, au moyen d'un mécanisme simple et découplé de ladite assise du siège, cette surélévation étant conçue pour offrir un bon maintien des cuisses, tout en facilitant l'actionnement des pédales de frein ou d'embrayage situées au niveau de ses pieds. De cette manière, le siège réglable selon l'invention apparait confortable et ergonomique pour le conducteur du véhicule. Cette surélévation est réalisée au moyen d'un dispositif de levage autonome, pouvant s'implanter sur un siège existant, sans perturber ses fonctionnalités originelles, en particuliers celles liées à la sécurité du conducteur.

Pour bien comprendre l'invention, les notions de « transversal », de « longitudinal », d' « avant », d' « arrière » doivent être interprétées par rapport aux directions généralement considérées d'un véhicule dans lequel serait implanté le siège.

L'invention a pour objet un siège réglable de véhicule comprenant une assise dotée à sa partie avant d'une traverse rigide. La principale caractéristique d'un siège réglable selon l'invention, est qu'il comprend un dispositif de levage constitué par un bourrelet en matériau mou et déformable, et par au moins un bras de positionnement supportant ledit bourrelet, chaque bras étant implanté dans la traverse d'assise et étant réglable au moins en hauteur pour faire émerger ledit bourrelet de l'assise du siège, ledit dispositif de levage étant recouvert par un garnissage. Pour cette invention, le terme « réglable » appliqué au siège n'a pas la signification habituellement retenue, qui est que ledit siège peut se retrouver en position plus ou moins avancée dans le véhicule, et que son dossier peut s'incliner de façon plus ou moins importante. Le terme « réglable » signifie que le relief de l'assise du siège est variable, au moyen d'une surélévation plus ou moins marquée d'un bourrelet implanté dans ladite assise. De cette manière, en fonction de la morphologie du conducteur et de sa taille, la surélévation du bourrelet pourra être ajustée afin que ledit bourrelet puisse soutenir confortablement les jambes dudit conducteur, tout en lui permettant de manipuler facilement les pédales d'actionnement se trouvant à ses pieds, et qui commandent le freinage ou l'embrayage du véhicule. Le matériau du bourrelet doit être conçu non seulement pour que le conducteur ait un ressenti agréable lorsqu'il est assis sur son siège, mais également pour qu'il puisse remuer facilement les jambes afin d'agir rapidement et sans contrainte sur les pédales. Préférentiellement, les dimensions du bourrelet sont inférieures à celles de la traverse. Les mécanismes mis en jeu pour surélever le bourrelet sont simplifiés, car un bourrelet constitué par un matériau a priori léger, est toujours plus facile à déplacer qu'une assise de siège de plus grande taille et comportant une structure lourde. Le terme « bourrelet » est général et peut, par exemple, désigner un coussin. Suivant les versions de véhicules retenues, le dispositif de levage peut être actionné, soit manuellement, soit automatiquement par l'intermédiaire d'un moteur. De cette manière, le bourrelet peut occuper une multiplicité de positions en fonction de l'inclinaison et de la longueur de chaque bras, et être figé dans chacune de celles-ci de façon inamovible. Le garnissage comprend de façon conventionnelle une mousse et une coiffe généralement constituée d'un tissu.

Avantageusement, chaque bras est implanté dans la traverse de façon inclinée, et est apte à subir une translation le long de son axe longitudinal pour régler la position du bourrelet à la fois en hauteur et selon une direction horizontale. Cette configuration octroie une plus grande souplesse de positionnement du bourrelet, en lui permettant à la fois d'être dans une position plus ou moins élevée et plus ou moins avancée par rapport à l'assise. Le terme « incliné » signifie que chaque bras est, ni en position verticale, ni en position horizontale.

De façon préférentielle, le siège comprend deux bras de positionnement latéraux et inclinés, le bourrelet s'étendant selon une direction transversale du siège, ledit bourrelet pouvant se déplacer entre une première position rentrée pour laquelle il repose sur la partie avant de la traverse, et une deuxième position complètement déployée pour laquelle ledit bourrelet s'est déplacé avec le maximum d'amplitude vers l'avant de l'assise tout en se retrouvant surélevé par rapport à ladite traverse. Le bourrelet contribue ainsi à agrandir vers l'avant l'assise du siège, tout en la surélevant. Il est supposé que les deux bras sont parallèles et se déplacent en même temps dans des plans longitudinaux et verticaux du véhicule.

Avantageusement, les deux bras sont reliés entre eux par une tige de liaison joignant leur extrémité inférieure, le garnissage comprenant une mousse et une coiffe, ladite coiffe venant s'enfiler autour de ladite tige de liaison. De cette manière, la coiffe du garnissage se déplace en même temps que les bras, et ne subit donc aucune tension particulière liée à ce déplacement. Il n'est donc pas nécessaire que cette coiffe soit élastique, un simple tissu résistant pouvant tout à fait convenir.

De façon avantageuse, le dispositif de levage est piloté par un moteur apte à figer le bourrelet dans n'importe quelle position située entre la première position et la deuxième position. De cette manière, la forme du siège peut varier continûment et être figée à tout instant, en fonction de la position recherchée.

Préférentiellement, le bourrelet comprend une embase inférieure plane et rigide, destinée à venir au contact de la traverse dans l'une de des positions, et une partie supérieure arrondie. L'embase plane et rigide est destinée à privilégier les conditions de contact avec la traverse, qui est généralement plane elle aussi. La partie arrondie est prévue pour venir au contact des jambes du conducteur, au niveau de leur pliure, afin de soutenir efficacement lesdites jambes et à permettre leur articulation sans gêne ni contrainte.

De façon préférentielle, la partie supérieure du bourrelet est réalisée en mousse. Il s'agit d'un mode de réalisation particulièrement adapté pour répondre au double problème du confort et de l'ergonomie du siège.

De façon avantageuse, le dispositif de levage comprend une plaque mobile et fixée sur la traverse d'assise, une première extrémité de ladite plaque étant montée articulée sur ladite traverse, et une deuxième extrémité reposant sur la partie supérieure du bourrelet. De cette manière, en fonction de la position du bourrelet, la plaque va se retrouver en position plus ou moins inclinée par rapport à un plan horizontal, car il est supposé que, quelle que soit la position du bourrelet, la plaque demeure perpétuellement en appui contre la partie supérieure dudit bourrelet. Comme le conducteur est amené à être assis sur ladite plaque, il pourra ressentir un certain confort lié à son inclinaison plus ou moins marquée, et qui va accompagner celle de ses jambes.

La plaque faisant partie intégrante du dispositif de levage, est donc intégralement recouverte par le garnissage.

Préférentiellement, la plaque a une forme rectangulaire et est montée articulée au niveau de son extrémité arrière autour d'un axe transversal du siège, ladite plaque reposant sur le bourrelet au niveau de son extrémité avant. De cette manière, l'inclinaison est effective selon une direction longitudinale du siège et donc selon une direction longitudinale du véhicule sur lequel il est destiné à être implanté.

De façon avantageuse, la plaque est rigide. Malgré le confort recherché par le conducteur, il est important que celui-ci se sente maintenu rigidement sur son siège, et que l'inclinaison de ladite plaque imprime celle de ses jambes.

Avantageusement, la partie supérieure du bourrelet est recouverte par un film favorisant le glissement de la plaque sur ledit bourrelet, lorsque celui-ci est en mouvement entre deux positions. En effet, puisque la plaque est amenée à demeurer en permanence sur le bourrelet et à glisser sur celui-ci à chaque mouvement du dispositif de levage il est important d'optimiser l'interface de contact entre ces deux éléments. Préférentiellement, le film de glissement est réalisé en plastique, part exemple en polyane dur, afin de rendre la surface dudit bourrelet la plus lisse possible. Il faut souligner qu'il est souhaitable que le film ne recouvre pas entièrement le bourrelet, sous peine de le rigidifier et de lui faire perdre son caractère déformable et confortable vis-à-vis du conducteur. De façon préférentielle, le film s'arrête à la moitié du bourrelet. De cette manière, il peut non seulement se déformer sous le poids des jambes du conducteur, mais il peut également retrouver rapidement sa forme initiale en l'absence de contrainte.

Les sièges réglables de véhicule selon l'invention, présentent l'avantage de mettre en oeuvre un dispositif de levage permettant de surélever l'assise du siège, et qui est dissocié de cette assise. Ce dispositif autonome n'impliquant qu'un bourrelet léger, par rapport au poids global et aux dimensions de l'assise, met en oeuvre un mécanisme de fonctionnement simplifié, facile d'utilisation et rapide à concevoir. Les sièges selon l'invention ont de plus l'avantage de posséder cette fonctionnalité supplémentaire à travers ce dispositif de levage de petite taille, tout en demeurant d'un encombrement sensiblement équivalent à celui des sièges existants. Enfin, le dispositif de levage qui est intégré dans les sièges selon l'invention, ne modifie pas leurs caractéristiques intrinsèques, notamment en termes de sécurité, en n'interférant pas par exemple avec le dispositif anti sous-marinage

On donne ci-après une description détaillée d'un mode de réalisation préféré d'un siège réglable selon l'invention, en se référant aux figures 1 à 3.
- La figure 1 est une vue partielle en perspective de dessous, d'une structure d'assise d'un siège réglable selon l'invention,
- La figure 2a est une vue partielle en perspective, du dessus d'une structure d'assise d'un siège selon l'invention, le bourrelet étant en position rentré,
- La figure 2b est une vue partielle en perspective, du dessus d'une structure d'assise d'un siège selon l'invention, le bourrelet étant en position complètement déployée,
- La figure 3 est une vue schématisée de coté d'un siège selon l'invention, et montrant le positionnement des jambes du conducteur par rapport au dispositif de levage,

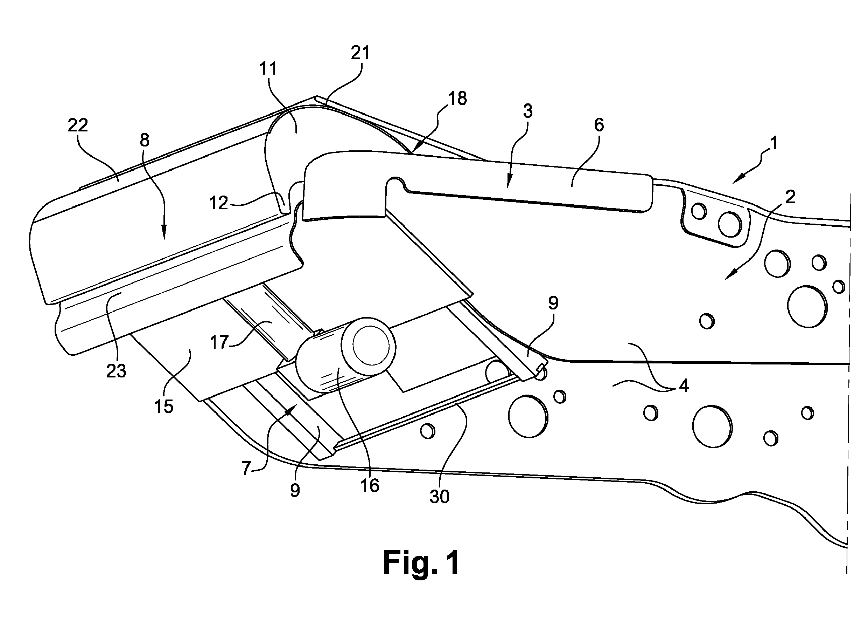

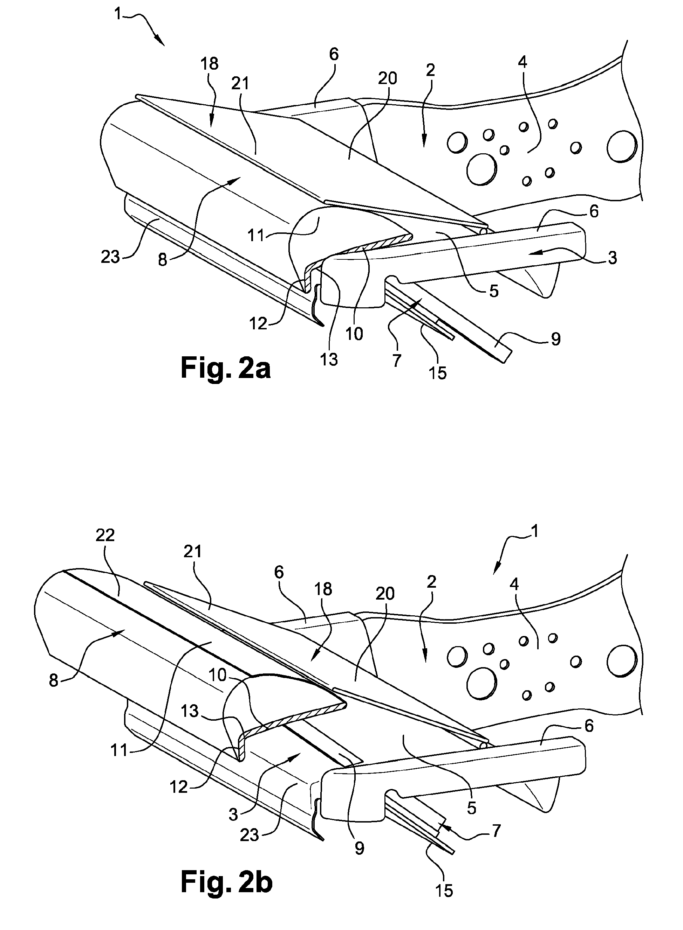

En se référant aux figures 1, 2a et 2b un siège réglable selon l'invention, comprend un dossier non représenté sur les figures, et une assise 1 constituée par une structure 2 et un garnissage 25. La structure 2 d'assise comprend à sa partie avant, une traverse 3 sensiblement plane et s'étendant suivant un plan horizontal, ladite traverse 3 étant supportée par deux flasques latéraux 4, chacun desdits flasques 4 étant inscrit dans un plan vertical et longitudinal du véhicule. La traverse 3 comprend une partie centrale 5 plane et horizontale, ainsi que deux bords latéraux 6 repliés, et s'étendant selon une direction longitudinale du véhicule, lesdits bords latéraux 6 étant chacun destiné à coiffer la partie supérieure de chacun des deux flasques 4. Un dispositif de levage 7, impliquant un bourrelet 8 en mousse ainsi que deux bras de positionnement 9 latéraux, est implanté dans la traverse 3 d'assise du siège selon l'invention. Le bourrelet 8 en mousse est une pièce pleine, présentant une embase 10 inférieure plane et rigide, destinée à venir au contact de la partie centrale 5 de la traverse 3, et une partie supérieure 11 arrondie, dont la courbure se dessine autour d'un axe transversal du véhicule. Les deux bras de positionnement 9 sont parallèles et inclinés, et sont reliés entre eux, d'une part par l'embase 10 rigide du bourrelet 8 qui s'étend selon une direction transversale du véhicule, et d'autre part, par une tige 30 reliant leurs extrémités inférieures, la ladite embase 10 et ladite tige 30 étant parallèles entre eux. Il est à souligner que le bourrelet 8 bien qu'étant mou et déformable, présente une certaine rigidité mécanique grâce à son embase rigide. La longueur du bourrelet 8 prise suivant cette direction transversale, est sensiblement égale au coté de la traverse 3 reliant les deux flasques 4, et sa largeur, qui est sa dimension prise suivant un axe longitudinal du véhicule, est inférieure à la dimension de la traverse 3 prise suivant cette même direction longitudinale. L'embase 10 du bourrelet 8 présente un bord 12 rectiligne en saillie, qui s'étend le long dudit bourrelet 8, selon une direction transversale du véhicule, ledit bord 12 saillant dans une direction qui est opposée à celle suivant laquelle saille la partie supérieure arrondie 11. De cette manière, l'embase 10 du bourrelet 8 forme un coude 13 permettant audit bourrelet 8 de venir recouvrir partiellement la partie centrale 5 plane et horizontale de la traverse 3, ainsi que la partie avant de la traverse 3, se terminant par un bord vertical 23, lorsque le bourrelet 8 se retrouve dans une position rentrée, comme le montre les figures 1 et 2a, et qu'il repose sur ladite traverse 3. Le dispositif de levage 7 comprend une plaque 15 de guidage inclinée, située sous la traverse 3 d'assise, les bras 9 de positionnement étant aptes à coulisser le long de ladite plaque 15. De façon plus précise, le bourrelet 8 est implanté au niveau de l'extrémité supérieure de chaque bras 9 de positionnement, lesdits bras 9 passant à travers la traverse 3 d'assise. Une motorisation 16 associée à une vis 17 sans fin et située sous la traverse 3 d'assise, permet de faire coulisser simultanément les deux bras 9 de positionnement, le long de la plaque de guidage 15 et suivant leur axe longitudinal, afin de faire saillir de façon plus ou moins importante, le bourrelet 8 de la traverse 3 d'assise.

En se référant aux figures 2a et 2b, une plaque rigide 18 de forme rectangulaire est montée articulée sur la traverse 3 d'assise, autour d'un axe transversal 19 de ladite traverse 3. Plus précisément, la plaque 18 est montée pivotante au niveau de sa partie arrière 20, tandis que sa partie avant 21 repose sur la partie supérieure 11 du bourrelet 8 en mousse. Quelle que soit la position du bourrelet 8 par rapport à la traverse 3 d'assise, la partie avant 21 de la plaque rigide 18 demeure en appui sur ledit bourrelet 8. Afin de favoriser le glissement de l'extrémité avant 21 de la plaque 18 sur le bourrelet 8, lorsque celui-ci change de position, la partie supérieure arrondie 11 dudit bourrelet 8 est recouverte d'un film 22 de glissement lisse. Il est important de souligner que le film 22 ne doit pas en principe recouvrir intégralement le bourrelet 8, au risque de rendre ledit bourrelet 8 rigide et de lui faire perdre toute sa souplesse.

En se référant aux figure 1 et 2a, le bourrelet 8 en mousse et qui est fixé à l'extrémité des deux bras de positionnement 9, peut se retrouver dans une position extrême, pour laquelle il est rentré et repose sur la traverse 3 d'assise. En raison de la forme particulière et coudée de son embase 10, le bourrelet 8 coiffe la partie avant de la traverse 3 en étant à la fois au contact de la partie centrale plane 5 et horizontale de ladite traverse 3 et en étant au contact du bord vertical 23, situé le plus en avant de ladite traverse 3.

En se référant à la figure 2b, le bourrelet 8 peut venir occuper une autre position extrême sur l'assise du siège, en étant en position complètement déployée sur la traverse 3 d'assise. Pour passer de la position rentrée représentée à la figure 2a, à la position complètement déployée représentée à la figure 2b, la motorisation 16 a été déclenchée pour translater simultanément les deux bras de positionnement 9 le long de la plaque de guidage 15, et suivant leur axe longitudinal, de manière à conserver la même inclinaison durant leur mouvement. Le bourrelet 8 se surélève par rapport au plan de la traverse 3 tout en étant translaté vers l'avant de ladite traverse 3. Lorsque le bourrelet 8 se déplace entre ses deux positions extrêmes, la plaque rigide 18 suit le mouvement, en s'inclinant de plus en plus par pivotement, en raison de son extrémité 21 avant qui demeure placée sur ledit bourrelet 8 et qui a également tendance à se surélever. La motorisation 16 peut s'interrompre à tout moment sur commande, afin de figer le bourrelet 8 dans une position intermédiaire située entre ses deux positions extrêmes.

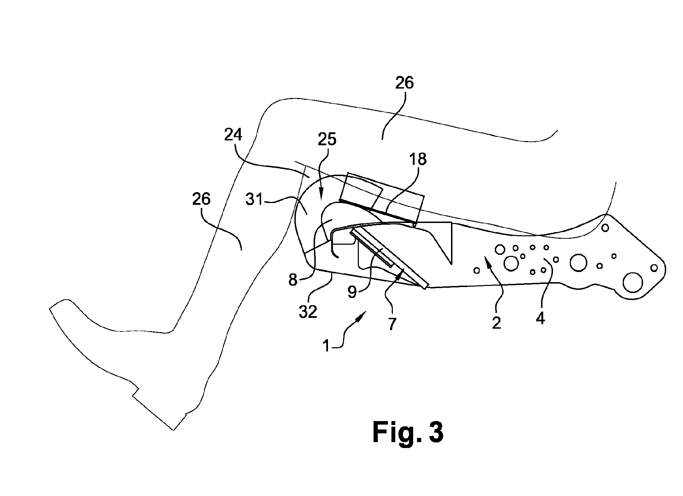

En se référant à la figure 3, le bourrelet 8 et la plaque rigide 18 montée pivotante sur la traverse 3, et venant en appui sur ledit bourrelet 8, sont recouverts par un garnissage 25 venant au contact de la jambe 26 du conducteur. Ce garnissage 25 est conventionnellement constitué par une mousse 31 épaisse et recouverte par une coiffe 32 en tissu résistant, cette coiffe 32 venant se fixer au niveau de la tige 30 reliant les extrémités inférieures des bras de positionnement 9. De cette manière, lorsque les bras 9 sont translatés, le garnissage 25 subit simultanément ce déplacement, sans générer le moindre surplus de tension sur ladite coiffe 32 En fonction de la morphologie du conducteur et surtout en fonction de la taille de ses jambes 26, le dispositif de levage 7 inclus dans la partie avant de l'assise 1 du siège, pourra être plus ou moins déployé pour faire émerger le bourrelet 8 de manière à ce qu'il vienne se placer au niveau de la pliure 24 de la jambe 26, sans gêner le conducteur lorsqu'il souhaite, par exemple, opérer une phase d'embrayage ou de freinage.

## Revendications

1. Siège réglable de véhicule comprenant une assise (1) dotée à sa partie avant d'une traverse rigide (3), **caractérisé en ce qu'**il comprend un dispositif de levage (7) constitué par un bourrelet (8) en matériau mou et déformable et par au moins un bras (9) de positionnement supportant ledit bourrelet (8), chaque bras (9) étant implanté dans la traverse (3) d'assise et étant réglable au moins en hauteur pour faire émerger ledit bourrelet (8) de l'assise (1) du siège, et **en ce que** ledit dispositif (7) est recouvert par un garnissage (25).

2. Siège réglable selon la revendication 1, **caractérisé en ce que** chaque bras (9) est implanté dans la traverse (3) de façon inclinée, et est apte à subir une translation le long de son axe longitudinal pour régler la position du bourrelet (8) à la fois en hauteur et selon une direction horizontale.

3. Siège réglable selon la revendication 2, **caractérisé en ce qu'**il comprend deux bras (9) de positionnement latéraux et inclinés, et **en ce que** le bourrelet (8) s'étend selon une direction transversale du siège, ledit bourrelet (8) pouvant se déplacer entre une première position rentrée pour laquelle il repose sur la partie avant de la traverse (3), et une position complètement déployée pour laquelle ledit bourrelet (8) s'est déplacé vers l'avant de l'assise (3) avec le maximum d'amplitude, tout en se retrouvant surélevé par rapport à ladite traverse (3).

4. Siège réglable selon la revendication 3, **caractérisé en ce que** les deux bras (9) sont reliés entre eux par une tige de liaison (30) joignant leur extrémité inférieure, et **en ce que** le garnissage (25) comprend une mousse (31) et une coiffe (32), ladite coiffe (32) venant s'enfiler autour de ladite tige de liaison (30).

5. Siège réglable selon l'une quelconque des revendications 3 ou 4, **caractérisé en ce que** le dispositif de levage (7) est piloté par un moteur (16), apte à figer la position du bourrelet (8) dans n'importe quelle position comprise entre la première position et la deuxième position.

6. Siège réglable selon l'une quelconque des revendications précédentes, **caractérisé en ce que** le bourrelet (8) comprend une embase inférieure (10) plane et rigide, destinée à venir au contact de la traverse (3) dans l'une de ses positions, et une partie supérieure (11) arrondie.

7. Siège réglable selon l'une quelconque des revendications précédentes, **caractérisé en ce que** la partie supérieure (11) du bourrelet (8) est réalisée en mousse.

8. Siège réglable selon l'une quelconque des revendications 2 à 7, **caractérisé en ce que** le dispositif de levage (7) comprend une plaque mobile (18) fixée sur la traverse (3) d'assise, une première extrémité (20) de ladite plaque (18) étant montée articulée sur ladite traverse (3), et une deuxième extrémité (21) reposant sur la partie supérieure (11) du bourrelet (8).

9. Siège réglable selon la revendication 8, **caractérisé en ce que** la plaque (18) a une forme rectangulaire et est montée articulée au niveau de son extrémité arrière (20) autour d'un axe transversal du siège, ladite plaque (18) reposant sur le bourrelet (8) au niveau de son extrémité avant (21).

10. Siège réglable selon l'une quelconque des revendications 8 ou 9,
**caractérisé en ce que** la plaque (18) est rigide.

11. Siège réglable selon l'une quelconque 8 à 10, **caractérisé en ce que** la
partie supérieure (11) du bourrelet (8) est recouverte au moins partiellement par un film (22) favorisant le glissement de la plaque (18) sur ledit bourrelet (8) lorsque celui-ci est en mouvement entre deux positions.
